# EUROPÄISCHE PATENTSCHRIFT

(11) **EP 1 235 007 B1**
(45) Veröffentlichungstag und Bekanntmachung des Hinweises auf die Patenterteilung: **15.03.2006**
(21) Anmeldenummer: 01126910.7
(22) Anmeldetag: 13.11.2001
(51) Int. Cl.: F16J 15/06, F16J 15/08, F02F 11/00

(54) **Mehrteilige Flachdichtung**
Flat gasket in several parts
Joint plat en plusieurs parties

(30) Priorität: 23.02.2001 DE 10108673
(43) Veröffentlichungstag der Anmeldung: 28.08.2002
(73) Patentinhaber: Elring Klinger AG, 72581 Dettingen (DE)
(72) Erfinder: Dukeck, Hans-Peter, 72525 Münsingen (DE); Kullen, Wilhelm, 72584 Hülben (DE); Wondraschek, Wolfgang, 71229 Leonberg (DE); Breier, Thomas, 55270 Klein-Winternheim (DE)
(74) Vertreter: Bartels, Martin Erich Arthur

(56) Entgegenhaltungen:
- DE-A- 3 432 610
- DE-U- 20 019 818
- GB-A- 1 412 141
- US-A- 3 175 832
- US-A- 3 231 289
- US-A- 5 149 109

## Beschreibung

Flachdichtungen finden heutzutage in den unterschiedlichsten Bereichen, beispielsweise bei KFZ-Motoren und -Getrieben, Anwendung. Dabei kommt es vor, dass eine Flachdichtung nicht nur zwei, sondern mehrere Bauteile gegeneinander abdichtet. Soll nun an einem der Bauteile eine Reparatur vorgenommen werden oder soll dieses Bauteil gegen ein anderes ersetzt werden, so war es bisher stets erforderlich, auch die von der Reparatur oder dem Ersatz nicht betroffenen Bauteile auseinander zu montieren und eine vollständige neue Dichtung einzusetzen, da Dichtungen bei einem erneuten Verbau durch die vorverformung bedingt ihre Dichtwirkung nicht mehr zuverlässig entfalten. Für diese Anwendungsfälle sind mehrteilige Dichtungen wünschenswert, bei denen ein Austausch von bestimmten Abschnitten möglich ist.

Bei im Wesentlichen ringförmigen oder U-förmigen Flachdichtungen mit großem Abmessungen besteht der Nachteil, dass zu ihrer Herstellung ein hoher Materialverbrauch nötig ist, da sie komplett beispielsweise aus einem Metallblech oder endlos beschichteten Kaltband ausgestanzt werden. Aus dem Gesichtspunkt der besseren Materialausnutzung wäre es daher auch für solche ring- oder U-förmigen Dichtungen wünschenswert, diese aus zwei oder mehreren Teilen herzustellen und anschließend zusammenzufügen.

Bei mehrteiligen Dichtungen muss jedoch gewährleistet sein, dass die Trennstellen zwischen den Dichtungsabschnitten keine Reduzierung der Dichtwirkung verursachen.

Durch die US-A-3,175,832 ist eine gattungsgemäße mehrteilige Flachdichtung bekannt, die mindestens an den Trennstellen zwischen den Dichtungsteilen mit einem Dichtungsmittel versehen ist, das durch den beim Einbau der Dichtung erzeugten Druck die Trennstellen verschließt. Bei der bekannten Lösung werden winklig zueinander verlaufende Dichtungsteile mit einem als Gleichteil ausgebildeten Eckstück miteinander verbunden, wobei neben den Trennstellen angrenzende Dichtungsmittel mit teilkreisförmigen Verbindungsteilen in korrespondierende Ausnehmungen des benachbarten Dichtungsteiles zur Komplettierung der mehrteiligen Flachdichtung eingreifen. Als Dichtmittel kommen insbesondere Elastomere oder plastisch verformbare Werkstoffe in Frage, die durch den beim Einbau durch die Bauteile auf die Dichtung erzeugten Druck in die Trennstelle eindringen und diese dicht verschließen. Das Dichtmittel kann auch bei zwei T-förmig aufeinander stehenden Dichtungen dafür Sorge tragen, dass im Stoßbereich der beiden T-Balken eine zuverlässige Abdichtung zwischen den beiden Flachdichtungen entsteht.

Bei der bekannten Lösung bereitet jedoch aufgrund des hergestellten festen Verbundes an Dichtungsteilen das Auftrennen der Dichtung an den Trennstellen Probleme.

Ausgehend von diesem Stand der Technik liegt daher der Erfindung die Aufgabe zugrunde, eine Möglichkeit zu schaffen, dass bei Bedarf die Dichtung an den Trennstellen leicht auftrennbar ist. Eine dahingehende Aufgabe löst eine mehrteilige Flachdichtung mit den Merkmalen des Patentanspruches 1 in seiner Gesamtheit.

Dadurch, dass gemäß dem kennzeichnenden Teil des Patentanspruches 1 die Trennstellen als Sollbruchstellen ausgeführt sind, liegt zunächst die Flachdichtung als einheitliches Gebilde vor; bei Bedarf kann jedoch die Dichtung an den Sollbruchstellen leicht aufgetrennt werden. Später wird dann der abgetrennte Bereich durch einen neuen Dichtungsbereich ersetzt, wobei das Dichtmittel durch den Druck beim Einbau des Ersatzdichtungsbereiches dafür sorgt, dass die Trennstelle verschlossen wird. Solche Sollbruchstellen lassen sich beispielsweise durch Perforation, Einritzen oder Lochen herstellen.

Das Dichtmittel kann in verschiedenen Formen auf der Flachdichtung auf gebracht sein. Es besteht die Möglichkeit, das Dichtmittel in Form einer Beschichtung aufzubringen. Es kann jedoch auch in im Bereich der Trennstellen vorgesehenen Taschen in der Dichtungsoberfläche eingebracht sein und von dort durch den Druck beim Einbau in die Trennstelle fließen. Dabei ist darauf zu achten, dass die Schichtdicke ausreichend groß ist, um genügend Dichtmittel zur Ausfüllung der Trennstelle zur Verfügung zu haben.

Ferner können die an die Trennstellen angrenzenden Dichtungsteile außerhalb des eigentlichen Dichtungsbereiches miteinander verbunden und/oder verbindbar sein.

Eine Lösung der einzelnen Dichtungsabschnitte ist dabei einfach durch Auftrennung der außerhalb des Dichtungsbereichs liegenden Verbindung möglich. Diese Art der Ausgestaltung erlaubt auch die Herstellung einer ring- oder U-förmigen Dichtung aus mehreren Teilen, wobei die einzelnen Teile außerhalb des Dichtungsbereichs zur Montage miteinander verbindbar sind.

Bei zunächst als ein Bauelement gelieferten Dichtungen kann die Verbindung benachbarter Dichtungsteile durch eine abtrennbare Materialbrücke hergestellt sein. Wird die Dichtung hingegen aus mehreren Teilen erst zusammengesetzt, so kann die Verbindung durch eine abtrennbare Materialbrücke mit zwei untereinander verbindbaren Teilen herstellbar sein. Die Brückenteile können dabei miteinander verschweißbar, verklebbar, verpressbar, vernietbar oder verschraubbar oder ineinander steckbar oder ineinander verrastbar nein. Hier sind prinzipiell sämtliche Verbindungstechniken einsetzbar.

Prinzipiell kann die erfindungsgemäße Dichtung aus jedem geeigneten Dichtungsmaterial bestehen. Besondere Vorteile sind jedoch zu verzeichnen, wenn sie eine beschichtete oder unbeschichtete Metalldichtung mit einer längs verlaufenden Sicke ist. Die Sicke sorgt für die eigentliche Dichtwirkung. Sie kann im Bereich der Trennstellen zur Aufnahme des Dichtmittels taschenartig erweitert sein. Auf diese Weise lässt sich sicherstellen, dass ausreichend Dichtmittel an den Trennstellen zur Verfügung steht, um diese nach dem Einbau der Dichtung verschließen zu können.

Nachfolgend werden anhand der Zeichnung verschiedene Ausführungsbeispiele erfindungsgemäßer Dichtungen sowie ein Einsatzbeispiel einer erfindungsgemäßen Dichtung näher beschrieben.

Es zeigen:
- Fig. 1.: eine Draufsicht auf einen Ausschnitt einer ersten erfindungsgemäßen Dichtung im Bereich einer Trennstelle;
- Fig. 2a: eine Draufsicht auf eine zweite erfindungsgemäße Dichtung im Bereich einer Trennstelle;
- Fig. 2b: eine Detailansicht der Dichtung aus Fig. 2a;
- Fig. 2c: einen Schnitt durch die Dichtung aus Fig. 2b;
- Fig. 3: eine Draufsicht auf eine dritte Dichtung im Bereich einer Trennstelle;
- Fig. 4: eine Draufsicht auf eine vierte Dichtung im Bereich einer Trennstelle;
- Fig. 5: eine Draufsicht auf eine fünfte Dichtung im Bereich einer Trennstelle;
- Fig. 6: eine Draufsicht auf eine sechste Dichtung im Bereich einer Trennstelle;
- Fig. 7: eine Draufsicht auf eine siebte Dichtung im Bereich einer Trennstelle;
- Fig. 8a: eine perspektivische Ansicht einer Baueinheit mit drei Bauteilen und zwei Dichtungen;
- Fig. 8b: eine Explosionszeichnung der Baueinheit aus Fig. 8a.

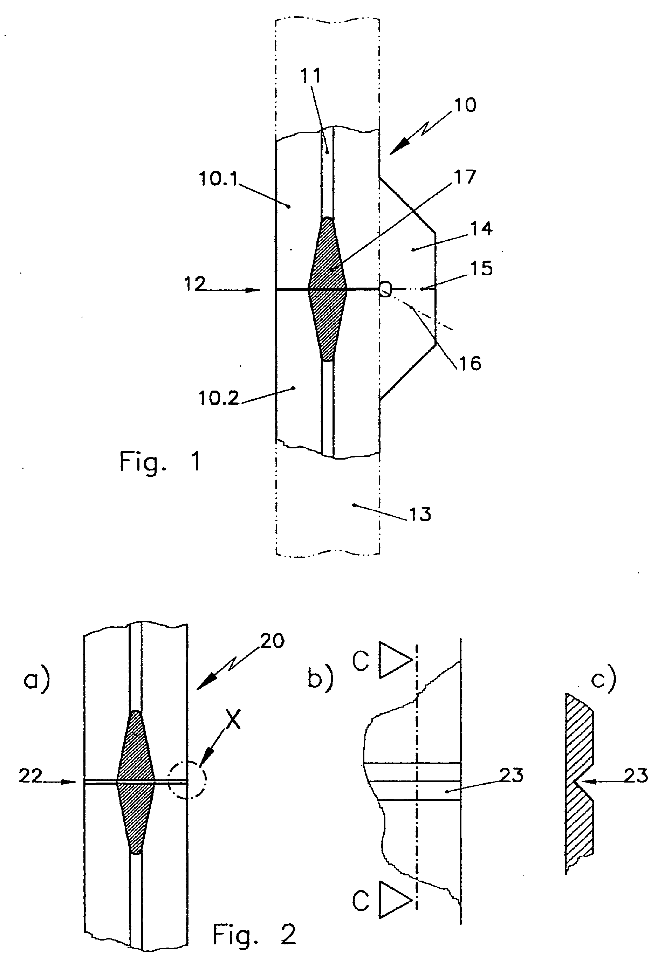

Fig. 1 zeigt in der Draufsicht eine Flachdichtung 1.0 mit einer längs verlaufenden Sicke 11, wobei die Dichtung 10 auf einem hier strichpunktiert angedeuteten Bauteil 13 aufgesetzt ist. Die Dichtung 10 weist eine Trennfuge 12 auf, die die Dichtung 10 in zwei Teile 10.1 und 10.2 teilt. Die beiden Teile 10.1 und 10.2 werden durch eine Materialbrücke 14 außerhalb des Bauteils 13, d. h. außerhalb des Dichtungshereichs zusammengehalten. Soll einer der Teile 10.1 oder 10.2 der Dichtung 10 ausgetauscht werden, so kann die Materialbrücke 14 entlang vorgeschwächter Linien 1 5 oder 16 oder auch an beliebiger Stelle aufgetrennt und dann das zu ersetzende Teil 10.1 oder 10.2 entnommen werden. Die Sicke 11 erweitert sich im Bereich der Trennfuge 12 taschenartig, wobei in diesen Taschen ein Dichtmittel 17 eingefüllt ist. Dieses Dichtmittel 17 sorgt dafür, dass durch den Druck beim Einbau der Dichtung 10 die Trennfuge 12 mit Dichtmittel 17 ausgefüllt wird, sodass die Dichtwirkung gewährleistet ist.

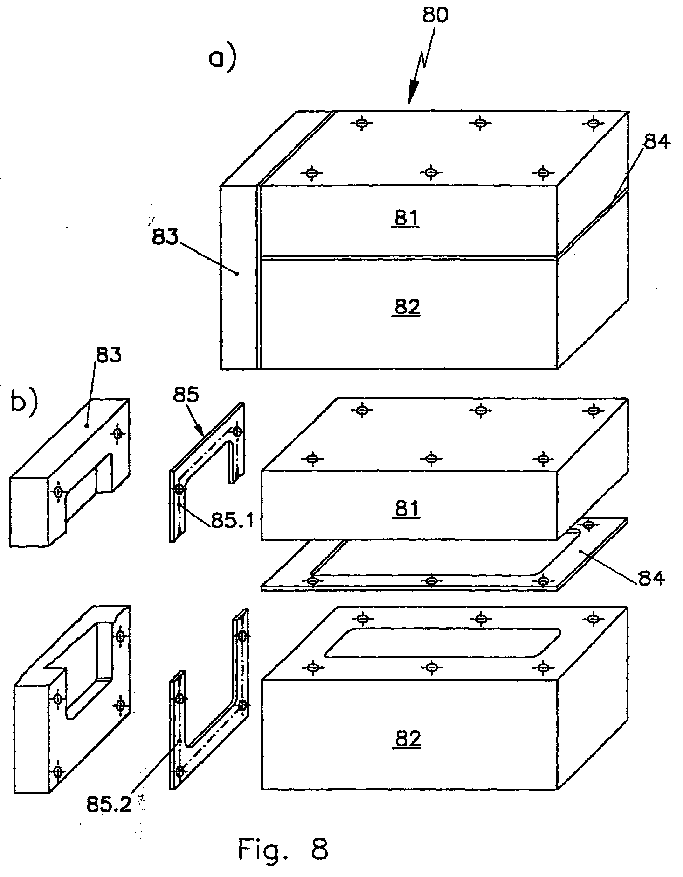

In Fig. 8 ist ein Anwendungsbeispiel der Dichtung 10 sowie der weiteren, in den Fig. 2 bis 7 gezeigten Dichtungen dargestellt. Fig. 8a zeigt eine Baueinheit 80, die aus drei Bauteilen 81, 82 und 83 besteht. Zwischen den Bauteilen 81 und 82 ist eine ringförmige Dichtung 84 angeordnet, wie insbesondere auch Fig. 8b zeigt. Auch zwischen dem Bauteil 83 und den Bauteilen 81 und 82 ist eine ringförmige Dichtung 85 angeordnet, die hier eine teilbare Dichtung ist, wie Fig. 8b zeigt, wobei sie an der Nahtstelle zwischen den Bauteilen 81 und 82 Trennstellen aufweist, sodass bei Reparatur beispielsweise des Teils 81 nur das Teil 81. und der Bereich 85.1 der Dichtung 85 entfernt werden müssen. Anschließend wird der Dichtungsteil 85.1 durch einen neuen Dichtungsbereich ersetzt und das Bauteil 81 wieder eingesetzt. Gegenüber den bisher bekannten einteiligen Ringdichtungen hat diese Ausgestaltung der Dichtung den Vorteil, dass bei Reparaturarbeiten an nur einem der Bauteile 81 bis 83 auch nur dieses Bauteil ausgetauscht werden muss und nicht alle Bauteile, wie dies bisher wegen des erforderlichen Austauschs der vollständigen Dichtungen 84 und 85 der Fall war.

Fig. 2a zeigt eine Dichtung 20, bei der keine explizite Trennfuge an der Trennstelle 22 vorhanden ist, sondern eine Sollbruchstelle in Form einer eingeritzten Nut 23, wie Fig. 2b und Fig. 2c zeigen.

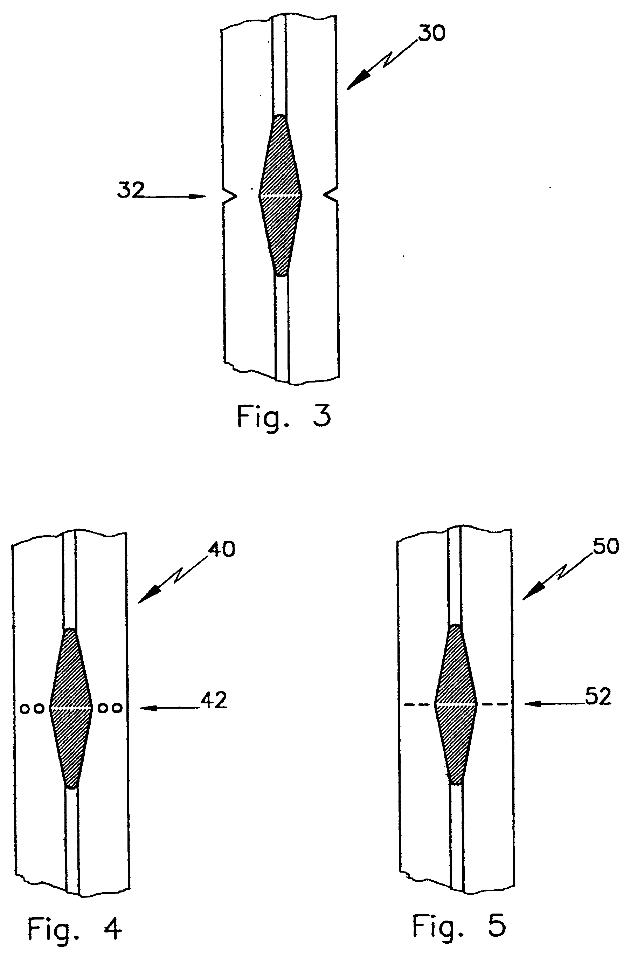

Bei der Dichtung 30 aus Fig. 3 wird die Sollbruchstelle an der Trennstelle 32 durch eine Querschnittsverjüngung erreicht.

Die Dichtungen 40 und 50 der Fig. 4 und 5 zeigen im Bereich der Trennstellen 42 und 52 durch Perforationen hergestellte Sollbruchstellen, wobei die Perforation an der Trennstelle 42 durch gestanzte Löcher und bei der Dichtung 50 durch gestanzte Schlitze erreicht wird.

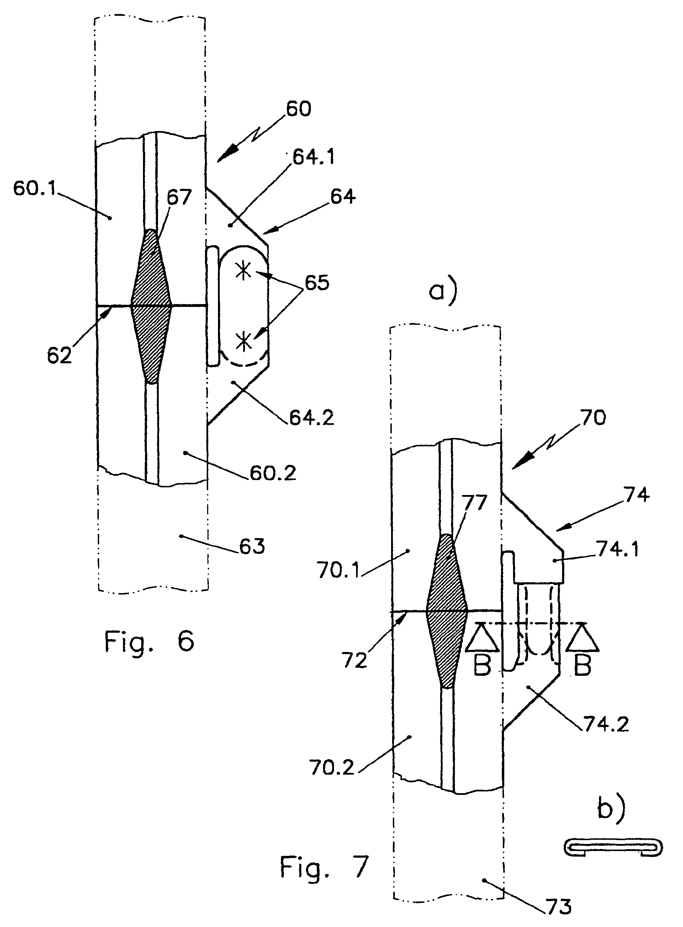

Die Fig. 6 und 7 zeigen Dichtungen 60 und 70, die zunächst aus einzelnen Abschnitten 60.1, 60.2 bzw. 70.1 und 70.2 gefertigt sind. Diese Einzelteile 60.1, 60.2 bzw. 70.1, 70.2 werden dann durch Bildung von Materialbrücken außerhalb des eigentlichen Dichtungsbereichs über dem Bauteil 63 bzw. 73 miteinander verbunden. Die Materialbrücke 64 weist dabei zwei Hälften 64.1 und 64.2 auf, die durch zwei Krimppunkte 65 oder auch auf jede beliebige andere Art miteinander verbunden werden. Jetzt ist die Dichtung 60 ein einteiliges Gebilde und kann so leicht und sicher montiert werden. Die Material brücke 74 der Dichtung 70 besteht ebenfalls aus zwei Hälften 74.1 und 74.2, die hier durch eine Steckverbindung miteinander gekoppelt werden, wie insbesondere auch das Schnittbild in Fig. 7b verdeutlicht. Auch hier sind jedoch auch andere Verbindungstechniken einsetzbar. Die Herstellung einer Dichtung zunächst aus mehreren Teilen hat insbesondere bei der Materialausnutzung sowie heim Transport der Dichtung und der Lagerhaltung Vorteile. Durch die Materialbrücken 64 und 74 kann dennoch für die Montage ein einteiliges Dichtungsbauteil hergestellt werden. Die zwischen den Teilen 60.1, 60.2 und 70.1, 70.2 bestehenden Trennfugen 62 und 72 werden wieder durch im Bereich der Trennfugen 62, 72 aufgebrachtes Dichtmittel 67 und 77 durch den Einbaudruck geschlossen.

## Patentansprüche

1. Mehrteilige Flachdichtung, die mindestens an den Trennstellen (12, 22, 32, 42, 52, 62, 72) zwischen den Dichtungsteilen (10.1, 10.2; 60.1, 60.2; 70.1, 70.2) mit einem Dichtungsmittel (17, 67, 77) versehen ist, das durch den beim Einbau der Dichtung (10, 20, 30, 40, 50, 60, 70) erzeugten Druck die Trennstellen (12, 22, 32, 42, 52, 62, 72) verschließt, **dadurch gekennzeichnet, dass** die Trennstellen (12, 22, 32, 42, 52, 62, 72) als Sollbruchstellen ausgeführt sind.

2. Dichtung nach Anspruch 1, **dadurch gekennzeichnet, dass** das Dichtmittel (17, 67, 77) ein Elastomer oder ein plastisch verformbarer Werkstoff ist.

3. Dichtung nach Anspruch 1 oder 2, **dadurch gekennzeichnet, dass** das Dichtmittel (17, 67, 77) in Form einer Beschichtung aufgebracht ist.

4. Dichtung nach Anspruch 1 oder 2, **dadurch gekennzeichnet, dass** das Dichtmittel (17, 67, 77) in im Bereich der Trennstellen (12, 22, 32, 42, 52, 62, 72) vorgesehenen Taschen in der Dichtungsoberfläche eingebracht ist.

5. Dichtung nach einem der Ansprüche 1 bis 4, **dadurch gekennzeichnet, dass** die angrenzenden Dichtungsteile (10.1, 10.2; 60.1, 60.2; 70.1, 70.2) außerhalb des eigentlichen Dichtungsbereichs miteinander verbunden und/oder verbindbar sind.

6. Dichtung nach Anspruch 5, **dadurch gekennzeichnet, dass** die Verbindung durch eine abtrennbare Materialbrücke (14) hergestellt ist.

7. Dichtung nach Anspruch 6, **dadurch gekennzeichnet, dass** die Verbindung durch eine Materialbrücke (64, 74) mit zwei untereinander verbindbaren Teilen (64.1, 64.2; 74.1, 74.2) herstellbar ist.

8. Dichtung nach Anspruch 7, **dadurch gekennzeichnet, dass** die Brückenteile (64.1, 64.2; 74.1, 74.2) miteinander verschweißbar, verklebbar, verpressbar, vernietbar, verkrimpbar oder verschraubbar oder ineinander steckbar oder miteinander verrastbar sind.

9. Dichtung nach einem der Ansprüche 1 bis 8, **dadurch gekennzeichnet, dass** sie eine beschichtete oder unbeschichtete Metalldichtung mit einer längs verlaufenden Sicke (11) ist.

10. Dichtung nach Anspruch 9, **dadurch gekennzeichnet, dass** die Sicke (11) im Bereich der Trennstellen (12) zur Aufnahme des Dichtmittels (17) taschenartig erweitert ist.

## Claims

1. Multi-part flat seal equipped with a sealing means (17, 67, 77) at least at the separation points (12, 22, 32, 42, 52, 62, 72) between the sealing parts (10.1, 10.2; 60.1, 60.2; 70.1, 70.2), the same closing the separation points (12, 22, 32, 42, 52, 62, 72) of the seal (10, 20, 30, 40, 50, 60, 70) by means of pressure created during the installation, **characterised in that** the separation points (12, 22, 32, 42, 52, 62, 72) take the form of pre-defined break points.

2. Seal according to Claim 1, **characterised in that** the sealing means (17, 67, 77) is an elastomer of a plastically deformable material.

3. Seal according to Claim 1 or 2, **characterised in that** the sealing means (17, 67, 77) is applied in the form of a coating.

4. Seal according to Claim 1 or 2, **characterised in that** the sealing means (17, 67, 77) is inserted into pockets in the seal surface envisaged within the area of the separation points (12, 22, 32, 42, 52, 62, 72).

5. Seal according to one of the Claims 1 to 4, **characterised in that** the adjacent sealing parts (10.1, 10.2; 60.1, 60.2; 70.1, 70.2) are connected and/or can be connected with one another outside of the actual sealing area.

6. Seal according to Claim 5, **characterised in that** the connection is made by means of a removable material bridge (14).

7. Seal according to Claim 6, **characterised in that** the connection can be made by means of a material bridge (64, 74) with two parts (64.1 64.2; 74.1, 74.2) that can be connected with each other.

8. Seal according to Claim 7, **characterised in that** the bridge parts (64.1, 64.2; 74.1, 74.2) can be welded, glued, pressed, studded, crimped or screwed to each other, or screwed, inserted, or arrested into each other.

9. Seal according to one of the Claims 1 to 8, **characterised in that** the same is a coated or uncoated metal seal with a longitudinally extending groove (11).

10. Seal according to Claim 9, **characterised in that** the groove (11) is expanded to form a pocket within the area of the separation points (12) for receiving the sealing medium (17).

## Revendications

1. Joint plat en plusieurs parties qui est muni, au moins aux points (12, 22, 32, 42, 52, 62, 72) de séparation entre les parties (10.1, 10.2 ; 60.1, 60.2 ; 70.1, 70.2) du joint, d'un agent (17, 67, 77) d'étanchéité qui, sous l'effet de la pression produite lors du montage du joint (10, 20, 30, 40, 50, 60, 70) ferme les points (12, 22, 32, 42, 52, 62, 72) de séparation, **caractérisé en ce que** les points (12, 22, 32, 42, 52, 62, 72) de séparation sont réalisés sous la forme de points destinés à se rompre.

2. Joint suivant la revendication 1, **caractérisé en ce que** l'agent (17, 67, 77) d'étanchéité est un élastomère ou est un matériau déformable plastiquement.

3. Joint suivant la revendication 1 ou 2, **caractérisé en ce que** l'agent (17, 67, 77) d'étanchéité est déposé sous la forme d'un revêtement.

4. Joint suivant la revendication 1 ou 2, **caractérisé en ce que** l'agent (17, 67, 77) d'étanchéité est introduit à la surface du joint dans des poches prévues dans la zone des points (12, 22, 32, 42, 52, 62, 72) de séparation.

5. Joint suivant l'une des revendications 1 à 4, **caractérisé en ce que** les parties (10.1, 10.2 ; 60.1, 60.2 ; 70.1, 70.2) du joint voisines sont reliées entre elles et/ou peuvent être reliées entre elles à l'extérieur de la zone d'étanchéité proprement dite.

6. Joint suivant la revendication 5, **caractérisé en ce que** la liaison est ménagée par un pont (14) de matière pouvant être séparé.

7. Joint suivant la revendication 6, **caractérisé en ce que** la liaison peut être ménagée par un pont (64, 74) de matière ayant deux parties (64.1, 64.2 ; 74.1, 74.2) pouvant être reliées entre elles.

8. Joint suivant la revendication 7, **caractérisé en ce que** les parties (64.1, 64.2 ; 74.1, 74.2) formant des ponts peuvent être soudées, collées, comprimées, rivetées, rétreintes ou vissées entre elles ou enfilées l'une dans l'autre ou encliquetées entre elles.

9. Joint suivant l'une des revendications 1 à 8, **caractérisé en ce que** c'est un joint métallique revêtu ou non revêtu ayant une moulure (11) longitudinale.

10. Joint suivant la revendication 9, **caractérisé en ce que** la moulure (11) s'évase en forme de poche dans la zone des points (12) de séparation pour la réception de l'agent (17) d'étanchéité.
